# EUROPEAN PATENT APPLICATION

(11) **EP 2 111 044 A1**
(43) Date of publication of application: **21.10.2009**
(21) Application number: 08305107.8
(22) Date of filing: 18.04.2008
(51) Int. Cl.: H04N 7/24

(54) **DTMB Demodulator with stream format auto-detector**

(71) Applicant: Thomson Licensing, 92100 Boulogne-Billancourt (FR)
(72) Inventor: Liu, Peng, 100085 Beijing (CN); Zou, Li, 100088 Beijing (CN)
(74) Representative: Ruellan-Lemonnier, Brigitte

(57) **Abstract**

A DTMB demodulator with stream format auto-detector allows different standards bitstreams to flow through the demodulator without a decapsulator and be appropriately decoded. With the features of the different stream formats, the stream format through the demodulation and channel decoding is detected by the stream format detector in the demodulator, and the stream format information is sent to the following source decoders. Based on the invention, the different format streams, such as, but not limited to, IP (Internet Protocol) data and MPEG-2, can be used directly in DTMB receiver without the stream decapsulator. The DTMB can show its great flexibility to easily connect with other broadcasting and communication systems without stream format transformation.

## Description

### FIELD OF THE INVENTION

The principles of the present invention are applicable to the Digital Terrestrial Multimedia Broadcast (DTMB) demodulator which belongs to the terrestrial multimedia broadcasting field.

### BACKGROUND OF THE INVENTION

The digital terrestrial media broadcasting (DTMB) standard is the Chinese HDTV standard, which was published in August 2006 and must be implemented in China in the future. A common broadcasting system mainly includes source encoding, channel encoding and modulation, demodulation and channel decoding, source decoding.

In some other broadcasting systems, such as the European DVB-T standard, the channel encoding and modulation, and demodulation and channel decoding relate to a particular stream format and only an MPEG-2 stream can be used directly in the system. If there are other format streams to be used, the streams have to be encapsulated into MPEG-2 streams before being sent into the channel encoding and modulation subsystem, and must be decapsulated into a corresponding stream format after being processed by the channel decoding and demodulation subsystem.

But unlike the DVB-T, the DTMB channel encoding and modulation subsystem, and the corresponding DTMB demodulation and channel decoding subsystem do not relate to the stream format in the DTMB standard, so any stream format can go through encoding and modulation and demodulation and decoding without stream format transform in the DTMB system.

### SUMMARY OF THE INVENTION

Although the demodulation and channel decoding do not relate to the stream format in DTMB, the source decoding following the channel encoding and modulation in receiver relates to the stream format and different standard decoders are the only means to decode the corresponding format stream. Currently, all the DTMB demodulator available in the market cannot detect the stream formats, so the different format streams still cannot be used directly in a DTMB receiver and a decapsulator is still needed. The ability of a DTMB being used directly for different stream formats is not shown in any demodulator.

A DTMB demodulator with stream format auto-detector is the subject of the present invention. With the proposed DTMB demodulator, the different format streams can be used directly in a DTMB receiver without the decapsulator.

### BRIEF DESCRIPTION OF THE DRAWINGS

Figure 1 is a prototype of a broadcasting system.
Figure 2 is the traditional DTMB demodulator.
Figure 3 is a DTMB demodulator with stream format detector.
Figure 4 is the format of an MPEG-2 encapsulated stream.
Figure 5 is the format for an Asynchronous Transfer Mode stream.
Figure 6 is the format of an Ethernet preamble and Ethernet II stream.

### DETAILED DESCRIPTION OF THE INVENTION

A DTMB demodulator with stream format auto-detector allows different standards bitstreams to flow through the demodulator without a decapsulator and be appropriately decoded. With the features of the different stream formats, the stream format through the demodulation and channel decoding is detected by the stream format detector in the demodulator, and the stream format information is sent to the following source decoders. Based on the invention, the different format streams, such as, but not limited to, IP (Internet Protocol) data and MPEG-2, can be used directly in DTMB receiver without the stream decapsulator. The DTMB can show its great flexibility to easily connect with other broadcasting and communication systems without stream format transformation.

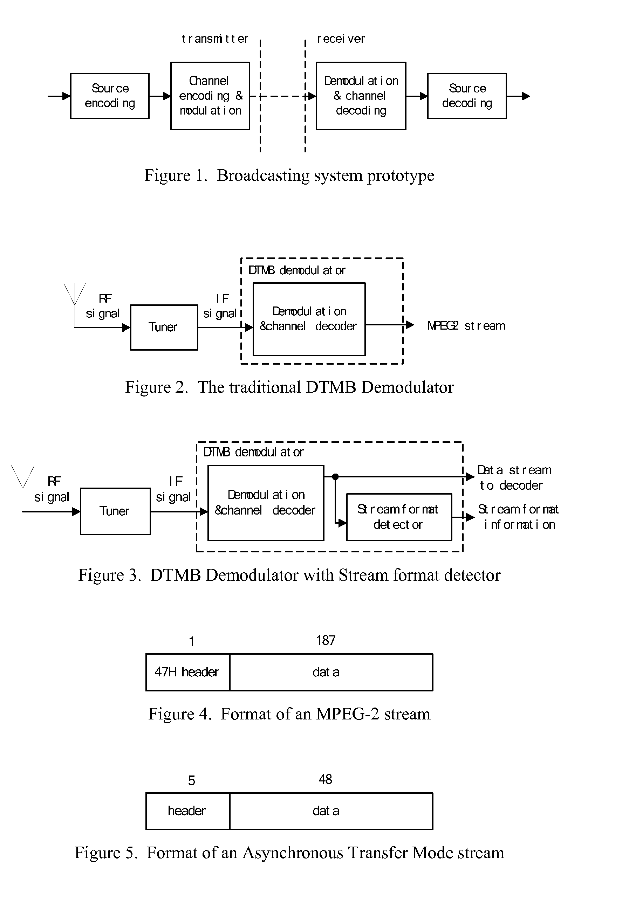

In the traditional DTMB demodulator, the stream format information cannot be obtained or is difficult to obtain. Consequently, except for an MPEG-2 stream, other format streams cannot be used directly in the receiver as the stream format cannot be known to the source decoder, and a stream decapsulator, or equivalent device, is needed to transform the stream from an MPEG-2 encapsulated stream to the corresponding stream format. The structure of the traditional DTMB demodulator is as figure 2.

In the invention, a DTMB demodulator with a stream format auto-detector is proposed. In the demodulator, the stream format can be detected automatically in a stream format detector and then the stream format information is sent to the following source decoder. The source decoder can directly decode the stream by using the detected stream format information. Therefore, any format stream can be processed directly in the receiver without a stream decapsulator.

Figure 3 is one proposed structure of a DTMB demodulator with a stream format auto-detector. The function of the tuner is to down-convert the RF signal to the IF signal. Among the functions performed by the demodulation and channel decoder is the demodulation and decoding of the received signal into a bitstream which can include the synchronization, timing, channel estimation and equalization, DFT, phase tracking, demapping, channel decoding, and perhaps other pertinent information. One of the functions of the stream format detector is the detection of the stream format using the feature matching method. The detector is much simpler than a decapsulator.

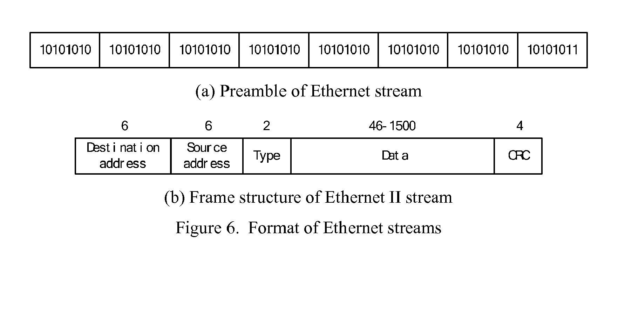

Different stream formats have different features. For example, the MPEG-2 stream, ATM stream and Ethernet IP stream have the stream formats as shown in Figures 4, 5, and 6, respectively.

Based on the features of the different stream formats, a match is performed of the frame structure with the features of the current data stream. If the data stream has the same features as any stream format, the stream format of the current data stream can be detected. Then the stream format of the current stream is sent to the following source decoder. The data can be decoded using the corresponding source decoder based on the stream and the detected stream format.
In one typical embodiment, three stream formats shown in figure 4 are detected. If the detector detects the 47H header every 188 bytes data, the stream format information indicating an MPEG-2 data stream is sent out. If the detector detects the fixed 5 byte header every 53 bytes data, the stream format information indicative of an ATM stream is sent out. If the detector detects the fixed sequence that is the same as the preamble of Ethernet, the Ethernet is confirmed, furthermore if the detector detects the data having the same structure as the frame structure of Ethernet II protocol, the stream format information indicative of an Ethernet II stream is sent out. By using the stream format information, the corresponding source decoder for the correct format data stream can be used to decode the payload of the data stream.

The advantage of using a DTMB demodulator with stream format auto-detection in the manner described is that by sending out the stream format information to the appropriate decoder, a multitude of different encapsulated streams can be transmitted using the DTMB modulator. It is an additional advantage that the complex stream decapsulator in the receiver can be cut.

## Claims

1. A demodulator for use in a digitally compressed data system, such as DTMB, in which the format of the compressed stream is detected from a plurality of stream formats and said format information is sent to a decoder.

2. The demodulator of claim 1, wherein said compressed stream format is in Asynchronous Transfer Mode format.

3. The demodulator of claim 1, wherein said compressed stream format is in Ethernet format.

4. The demodulator of claim 1, wherein said compressed stream format is in Ethernet II format.

5. A method of detecting a format of a compressed data stream in a DTMB demodulator, such that one of a plurality of compressed data stream formats is distinguished.

6. The method of claim 5, wherein information indicative of said compressed data stream format is sent to a decoding apparatus.

7. The method of claim 5, wherein the compressed data stream format detected is Asynchronous Transfer Mode.

8. The method of claim 5, wherein the compressed data stream format detected is Ethernet.

9. The method of claim 5, wherein the compressed data stream format detected is Ethernet II.
